# FASCICULE DE BREVET EUROPEEN

(11) **EP 1 099 476 B1**
(45) Date de publication et mention de la délivrance du brevet: **08.11.2006**
(21) Numéro de dépôt: 00403036.7
(22) Date de dépôt: 31.10.2000
(51) Int. Cl.: B01J 27/128, B01J 27/12, C10G 49/02, C10G 45/48, C10G 45/52, B01J 23/38, B01J 23/54, B01J 23/76, B01J 23/89

(54) **Catalyseur fluoré et chloré comprenant un métal du groupe VIII et un métal additionnel et son utilisation pour l'hydrogénation de composés aromatiques**
Chlorierter und fluorierter Aromatenhydrierungskatalysator mit einem Metall der Gruppe VIII und einem zusätzlichen Metall
Chlorinated and fluorinated catalyst comprising a group VIII metal and an additional metal and its use in aromatics hydrogenation

(30) Priorité: 10.11.1999 FR 9914140; 10.11.1999 FR 9914141; 10.11.1999 FR 9914143
(43) Date de publication de la demande: 16.05.2001
(73) Titulaire: Institut Français du Pétrole, 92852 Rueil-Malmaison Cedex (FR)
(72) Inventeur: Marchal-George, Nathalie, 69230 Saint Genis Laval (FR); Kasztelan, Slavik, 92500 Rueil-Malmaison (FR)

(56) Documents cités:
- EP-A- 0 751 204
- FR-A- 1 596 032
- FR-A- 2 006 803
- FR-A- 2 223 337
- FR-A- 2 695 648
- DATABASE WPI Section Ch, Week 199622 Derwent Publications Ltd., London, GB; Class H04, AN 1996-220406 XP002140861 & RU 2 044 031 C (KRASD LENNEFTEKHIM RES PRODN ASSOC), 20 septembre 1995 (1995-09-20)

## Description

### Domaine technique

La présente invention concerne un catalyseur supporté à base d'un métal du groupe VIII et d'un métal additionnel et comprenant au moins deux halogènes tel que défini dans le revendication 1. L'invention concerne également l'utilisation de ce catalyseur dans un procédé pour l'hydrotraitement de charges hydrocarbonées contenant de faibles teneurs en soufre et en particulier pour l'hydrogénation de composés aromatiques contenus dans ces charges.

Les procédés d'hydrotraitement sont fréquemment utilisés dans les opérations de raffinage des coupes pétrolières pour améliorer les caractéristiques des produits finis en terme de spécifications requises pour atteindre la qualité des produits et les normes de pollution. Actuellement, les coupes gazoles, qu'elles proviennent de la distillation ou qu'elles soient issues d'un procédé de conversion tel qu'un craquage catalytique, contiennent des quantités non négligeables de composés aromatiques, azotés et soufrés. Dans le cadre législatif actuel de la majorité des pays industrialisés, le carburant utilisable dans les moteurs doit contenir une quantité de soufre inférieure à 500 partie par million en poids (ppm). Dans un avenir très proche, cette quantité maximale va être ramenée à 350 ppm à l'horizon 2000, puis à 50 ppm à l'horizon 2005 pour les pays membres de la Communauté Européenne. Concernant la teneur en composés polyaromatiques dans les gazoles, cette teneur risque d'être abaissée à une valeur très basse (de l'ordre de 1 à 2 %) à partir de 2005 Dans ce cadre, l'hydrogénation des polyaromatiques contenus dans les coupes gazoles revêt donc aussi une importance toute particulière, du fait des nouvelles normes en soufre et en composés aromatiques dans ce type de combustibles

La désulfuration se fait généralement dans des conditions et sur des catalyseurs qui ne sont pas capables d'assurer simultanément l'hydrogénation des composés aromatiques. Il est nécessaire d'effectuer alors un premier traitement de la coupe pour diminuer la teneur en soufre suivi d'un second traitement afin d'hydrogéner les composés aromatiques contenus dans cette coupe. Cette seconde étape est généralement réalisée par mise en contact de la coupe, en présence d'hydrogène, avec un catalyseur, généralement à base de métal noble. Cependant, du fait que le procédé de désulfuration ne permet jamais d'éliminer totalement les composés soufrés et azotés, les catalyseurs utilisés doivent pouvoir opérer en présence de ces composés et par conséquent contenir des phases actives ayant de bonnes propriétés thio-résistantes

L'objectif de la présente invention est de fournir un nouveau catalyseur pour la désulfuration de coupes pétrolières et l'hydrogénation d'aromatiques et polyaromatiques présents dans ces mêmes coupes

### Art antérieur

Parmi les catalyseurs présentant des propriétés de thio-résistance connus de l'homme du métier, on trouve essentiellement des catalyseurs à base d'un métal noble du groupe VIII ou d'association de ces métaux supportés sur un support acide de type alumine (brevet US-A-3 943 053), silice alumine et zéolithe (US-A-4 960 505, 5 308 814 et 5 151 172). Toutefois, les métaux nobles restent extrêmement sensibles à la présence de soufre qui est un inhibiteur puissant de l'activité des métaux nobles. Pour éviter l'empoisonnement par le soufre de la phase hydrogénante, il semble préférable que les métaux soient déposés sur un support acide. Ainsi l'utilisation d'une quantité limitée d'halogène tels que le chlore et le fluor pour augmenter l'acidité de catalyseurs de type platine/alumine a été rapportée (J.P. Frank, J.C. Marquis and M. Derrien, CR Acad. Sci. Paris, Série C, t284 (1977) 297, et J Cosyns, J.P Frank and G. Marin-Gil, CR Acad. Sci. Paris, Série C, t284 (1978) 85).

Dans le cas de l'utilisation de support de type alumine (brevet US-A-3 943 053), il est rapporté qu'il est nécessaire de contrôler précisément les teneurs en métal, ainsi que les conditions de préparation. Cette contrainte entraîne des inconvénients évidents en terme de flexibilité lors de l'extrapolation industrielle de ces formulations. L'utilisation de supports à base de silice-alumine a par ailleurs été rapportée. On peut par exemple citer les brevets US-A-4 960 505, 5 308 814 et 5 151 172 Ces différents documents enseignent que le type de zéolithe permettant d'obtenir les propriétés recherchées est très spécifique D'autre part, l'utilisation de tels supports présente plusieurs inconvénients majeurs, parmi lesquels leur préparation, qui inclut une étape de mise en forme nécessitant l'utilisation de liants minéraux, tels que les alumines. Les méthodes de préparation doivent donc permettre des dépôts sélectifs des métaux nobles sur le matériau zéolithique par rapport au dépôt sur le liant, ce qui présente une spécificité supplémentaire liée à ce type de catalyseurs.

Plusieurs brevets décrivent des catalyseurs métalliques comprenant au moins un halogène et destinés à être utilisés dans des procédés d'hydrogénation de composés aromatiques. En particulier, la demande de brevets EP 0 751 204 décrit un procédé d'hydrogénation d'aromatiques avec injection du chlore sur un catalyseur à base d'un métal noble et contenant au moins 1 % d'un halogène pour augmenter l'activité hydrogénante du catalyseur.

Le brevet US 3,943,053 concerne une méthode pour l'hydrogénation des composés aromatiques à l'aide d'un catalyseur comprenant deux métaux nobles, à savoir le platine et le palladium, et une quantité de chlore comprise entre 1,2 et 2,5 % en poids.

Le brevet FR-A-2 413 127 divulgue un procédé de préparation d'un catalyseur de métal noble du groupe VIII présentant un résistance améliorée au soufre et son utilisation pour l'hydrogénation d'hydrocarbures aromatiques.

La demande de brevet EP 0 955 090 divulgue un catalyseur comprenant deux métaux nobles (Pt et Pd), du fluor et du chlore. La composition catalytique est telle que la teneur en fluor soit comprise entre 0,5 et 1,5 % en poids et la teneur en chlore entre 0,3 et 2 % en poids.

### Intérêt de l'invention

Il a été découvert par la demanderesse qu'un catalyseur, tel que définit dans la revendication 1, utilisé dans les procédés d'hydrotraitement et en particulier dans l'hydrogénation de composés aromatiques, comprenant au moins un métal du groupe VIII de la classification périodique des éléments, au moins un métal additionnel, au moins deux halogènes dont du chlore et du fluor et au moins une matrice oxyde amorphe, la composition catalytique étant telle que la quantité de fluor représente au moins 1,5 % en poids de la masse totale dudit catalyseur, conduit à de meilleures performances en terme de taux d'hydrogénation d'aromatiques que les catalyseurs de l'art antérieur comprenant soit un seul métal, soit une faible quantité d'halogène. Le taux élevé de la conversion des composés aromatiques en composés saturés correspondants obtenu avec le catalyseur selon l'invention est lié aux effets synergiques surprenants de l'association des métaux d'une part, et de la combinaison des halogènes, présents à des teneurs plus élevées que celles de l'art antérieur, d'autre part. Il résulte de ce taux d'hydrogénation élevé une très bonne résistance du catalyseur au soufre, si bien que l'activité dudit catalyseur n'est pas perturbée par de faibles teneurs résiduelles en soufre dans la charge à traiter.

Le métal additionnel un métal choisi parmi les métaux groupe IB de la classification périodique des éléments, les métaux du groupe IIB et les métaux du groupe VIIB.
Le catalyseur de la présente invention permet de réaliser avantageusement l'hydrodésulfuration et l'hydrogénation des composés aromatiques présents dans des charges hydrocarbonées contenant des composés soufrés. Plus particulièrement, les charges hydrocarbonées pouvant être traitées par le catalyseur de l'invention sont des coupes hydrocarbonées contenant des aromatiques et plus particulièrement des coupes gazoles issus de la distillation du pétrole brut et des divers procédés de conversion tels que les coupes appelée "cycle oils", issus des procédés de craquage catalytique.

L'invention concerne aussi l'utilisation du catalyseur dans un procédé d'hydrogénation de composés aromatiques présents dans des coupes hydrocarbonées comprenant du soufre. La charge que l'on peut traiter par le procédé de l'invention présente des teneurs en soufre inférieures à 2000 ppm en poids et de préférence de 0,01 à 500 ppm en poids.

Ce catalyseur peut aussi convenir pour tout procédé visant à hydrogéner tout ou partie des composés aromatiques d'une charge contenant des traces de composés soufrés, tel que l'hydrogénation des aromatiques dans les huiles alimentaires et dans les solvants.

### Description de l'invention

Le catalyseur selon l'invention est définie dans le libellé de la revendication indépendante 1 et contient au moins une matrice oxyde amorphe, au moins un métal du groupe VIII de la classification périodique des éléments, au moins un métal additionnel, au moins deux halogènes dont du chlore et du fluor.

Dans tout ce qui suit, on entend par matrice oxyde amorphe, une matrice ne comprenant pas, dans sa structure, d'éléments actifs au sens catalytique.

Le catalyseur selon l'invention est caractérisé en ce que la quantité de fluor représente au moins 1,5 % en poids de la masse totale dudit catalyseur.

Selon l'invention, le métal additionnel est soit un métal du groupe IB de la classification périodique des éléments, soit un métal du groupe IIB, soit encore un métal du groupe VIIB.

D'une manière préférée, le catalyseur de la présente invention comprend, en % poids par rapport à la masse totale du catalyseur :
- de 78 à 98,3% d'au moins une matrice oxyde amorphe,
- de 0,1 à 5% d'au moins un métal du groupe VIII de la classification périodique, de préférence choisi dans le groupe constitué par le palladium, le rhodium, le nickel et le cobalt,
- de 0,1 à 5% d'au moins un métal additionnel,
- de 0,1 à 10% de chlore,
- au moins 1,5 %, de préférence au plus 20 % de fluor. Avantageusement, la quantité de fluor est comprise entre 1,8 et 15 % et de manière encore plus préférée entre 2 et 10 % de fluor.

De préférence, le métal du groupe IB est l'or ou l'argent. Le métal préféré du groupe IIB est le zinc Le métal préféré du groupe VIIB est le rhénium.

La matrice oxyde amorphe utilisée comme support est choisie parmi les alumines de transition, les silices et les silices alumines et leurs mélanges. Ce type de support présente une surface spécifique, déterminée par les techniques connues par l'homme du métier, comprise entre 100 et 600 m²/g, de préférence entre 150 et 500 m²/g. La matrice oxyde amorphe peut être utilisée sous forme de poudre ou préformée sous forme de billes ou d'extrudés

Le catalyseur supporté selon l'invention peut être préparé par toutes les méthodes bien connues par l'Homme de l'art.

D'une manière préférée, le catalyseur est obtenu par le dépôt du métal du groupe VIII et du métal additionnel sur un support contenant la matrice oxyde amorphe, le chlore et le fluor. Selon un mode de préparation préférée du catalyseur de l'invention, la matrice oxyde amorphe est préalablement mise en contact avec le chlore et le fluor avant l'introduction du métal du groupe VIII et du métal additionnel. Plus précisément, un composé fluoré est d'abord incorporé à la matrice oxyde amorphe dans une quantité telle que la composition catalytique finale contienne au moins 1,5 % de fluor en poids par rapport à sa masse totale. Le support fluoré ainsi obtenu est ensuite mis en contact avec un composé chloré pour former un support fluoré et chloré présentant une surface spécifique comprise entre 100 et 500 m²/g de préférence entre 150 et 420 m²/g.

Les composés halogénés sont de préférence ajoutés à l'aide d'une solution aqueuse préparée à partir des acides minéraux correspondants, par exemple l'acide fluorhydrique HF ou l'acide chlorhydrique HCl.

Le fluor peut également être introduit sous la forme d'acide fluorhydrique, de fluorure d'ammonium, d'hydrogénofluorure d'ammonium ou encore de composés organofluorés lors de la mise en forme de la matrice oxyde amorphe. La décomposition d'un composé organofluoré et/ou organochloré sur le catalyseur est une méthode qui peut également convenir pour la préparation du catalyseur selon l'invention. Cette méthode est particulièrement avantageuse, dans le cas du fluor car elle permet d'éviter, lors de la préparation du catalyseur, l'utilisation de solutions d'acide fluorhydrique, qui est maintenant réglementée Le composé organochloré est par exemple le dichlorométhane, le trichlorométhane, le dichloroéthane, le trichloroéthane, le tétrachloroéthylène, l'hexachloroéthane, le chloroforme

Ensuite, lorsque le support est chloré et fluoré, les métaux compris dans le catalyseur peuvent être introduits de façon séparée sur le catalyseur, selon des étapes successives d'addition utilisant des solutions d'un ou de plusieurs éléments, ou simultanément, en utilisant une solution commune des éléments. Lorsque plusieurs étapes d'imprégnation sont utilisées pour obtenir le catalyseur, des étapes de séchage ou d'activation (calcination ou réduction) peuvent être réalisées entre deux étapes d'imprégnation successives

Les précurseurs des métaux du groupe VIII qui peuvent être utilisés sont des précurseurs conventionnels bien connus de l'homme du métier. Avantageusement, pour les métaux non nobles on utilisera les nitrates, les sulfates, les phosphates, les halogénures par exemple, chlorures, bromures et fluorures, les carboxylates par exemple acétates et carbonates. Pour les métaux nobles on utilise préférentiellement les nitrates quand ils existent, les halogénures, par exemple les chlorures, les acides tels que l'acide chloroplatinique, chloroiridique, les chlorometallates de métaux alcalins, les complexes chloro- ou hydroxo-amminés, les oxychlorures tels que l'oxychlorure ammoniacal de ruthénium. On peut également employer des complexes de coordination solubles dans les solvants organiques, tels que par exemple les complexes acétylacétonates On peut employer également les complexes carbonyls.

Les précurseurs des métaux du groupe IB utilisés sont bien connus de l'homme du métier. On emploie avantageusement les composés solubles dans l'eau, tels que le nitrate et le chlorure d'argent et l'acide chloroaurique

Les précurseurs des métaux du groupe IIB utilisés sont bien connus de l'homme du métier. On emploie avantageusement les composés solubles dans l'eau, tels que le nitrate et le chlorure de zinc.

Les précurseurs des métaux du groupe VIIB utilisés sont bien connus de l'homme du métier. On emploie avantageusement les composés solubles dans l'eau, tels que le perrhenate d'ammonium, le nitrate et le chlorure de manganèse.

La préparation du catalyseur se termine généralement par une étape de traitement en température sous air (calcination) Avant utilisation, le catalyseur est éventuellement réduit par passage d'un mélange gazeux contenant de l'hydrogène sur le catalyseur porté à une température généralement comprise entre 50 °C et 600°C.

Le catalyseur selon l'invention est utilisable pour le traitement des coupes hydrocarbonées. En particulier, il est utilisable dans un procédé d'hydrogénation de composés aromatiques présents dans les charges contenant des composés soufrés.

La charge que l'on peut traiter par le procédé utilisant le catalyseur de l'invention présente des teneurs en soufre inférieures à 2000 ppm en poids, de préférence de 0,5 à 500 ppm en poids.

Aussi, en fonction de la teneur en soufre de la charge à traiter, il peut être avantageux de prétraiter la charge, afin de diminuer sa teneur en soufre par des procédés conventionnels d'hydrotraitement.

Le procédé d'hydrogénation d'aromatiques selon l'invention est réalisé en général à des températures de 100 à 400°C, de préférence de 150 à 380 °C. La pression opératoire est généralement de 0,1 à 30 MPa, de préférence de 1 à 20 MPa. La vitesse spatiale (VVH), exprimée en volume de charge liquide traitée par volume de catalyseur et par heure, est en général de 0,1 à 20 h⁻¹ Le rapport hydrogène/charge utilisé s'exprime en volume d'hydrogène mesuré dans les conditions normales par volume de charge liquide ; il est généralement de 50/1 à 2000/1.

L'étude des résultats obtenus par ce procédé d'hydrogénation dans ses modes de mise en oeuvre préférés, fait apparaître un double effet synergique lié d'une part, à l'association d'au moins deux métaux et d'autre part, à la combinaison d'au moins deux halogènes dont l'un au moins est utilisé en forte quantité.
Les exemples qui suivent illustrent l'invention sans en limiter la portée.

### Exemple n°1 : Préparation d'un support alumine.

Nous avons fabriqué un support S1 à base d'alumine en grande quantité de façon à pouvoir préparer les catalyseurs décrits ci après à partir du même support mis en forme Pour ce faire, nous avons utilisé une matrice composée de boehmite tabulaire ultra fine ou gel d'alumine commercialisée sous le nom SB3 par la société Condéa Chemie Gmbh. Ce gel a été mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,3 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 243 m²/g, un volume poreux de 0,61 cm³/g et une distribution en taille de pore monomodale centrée sur 10 nm. L'analyse de la matrice par la diffraction des rayons X révèle que celle ci est composée uniquement d'alumine gamma cubique de faible cristallinité.

### Exemple n°2 : Préparation de supports alumine halogénés.

Un premier support alumine halogéné à faible teneur en fluor a été préparé à partir du support alumine S 1 de l'exemple 1. La méthode utilisée consiste à introduire successivement le chlore et le fluor en utilisant un excès de solution. Le support S1 est d'abord traité avec une solution d'acide chlorhydrique à 2 % en Cl pendant 30 minutes de façon à obtenir la quantité de chlore recherchée sur le support. Après élimination de la solution, une solution d'acide fluorhydrique est mise en contact avec le support chloré pendant 1 h 30 min. Le support est ensuite rincé puis séché sous air sec pendant 2 heures à 530°C.Le support S2 ainsi obtenu contient 0,65 % en poids de chlore et 0,62 % en poids de fluor. Il a une surface spécifique de 218 m²/g, un volume poreux de 0,59 cm³/g.

Un second support alumine halogéné S3 a été préparé de manière différente au précédent, de façon à introduire une quantité de fluor suffisamment importante. Pour ce faire, nous avons utilisé une matrice composée de boehmite tabulaire ultrafine ou gel d'alumine commercialisée sous le nom SB3 par la société Condéa Chemie Gmbh. Ce gel a été mélangé à une solution aqueuse contenant de l'acide nitrique à 66% (7% poids d'acide par gramme de gel sec) puis malaxé pendant 15 minutes dans un malaxeur en bras en Z. On introduit ensuite le fluor sous la forme de fluorure d'ammonium de manière à introduire 6,5% en masse de fluor. Après introduction du fluorure d'ammonium, on malaxe encore 10 minutes. A l'issue de ce malaxage, la pâte obtenue est passée à travers une filière ayant des orifices cylindriques de diamètre égal à 1,3 mm. Les extrudés sont ensuite séchés pendant une nuit à 120°C puis calcinés à 550°C pendant 2 heures sous air humide contenant 7,5% volume d'eau. Le support est ensuite traité avec une solution d'acide chlorhydrique à 2 % en Cl pendant 30 minutes, de manière à déposer environ 0,7 % de chlore sur le support fluoré. On obtient ainsi des extrudés cylindriques de 1,2 mm de diamètre, ayant une surface spécifique de 214 m²/g, un volume poreux de 0,63 cm³/g, contenant 0,71% de chlore et 5,9 % de fluor. L'analyse de la matrice par la diffraction des rayons X révèle que celle ci est composée uniquement d'alumine gamma cubique de faible cristallinité.

### Exemple n°3 : Préparation des catalyseurs monométalliques (non conforme)

La méthode de préparation utilisée consiste à imprégner en excès les extrudés d'alumine halogénés de l'exemple 2 (support S2 et S3) par une quantité de sel de l'un des métaux choisi dans le groupe constitué par le palladium, le rhodium, le nickel, le cobalt (groupe VIII de la classification périodique des éléments), l'or (groupe IB de la classification périodique des éléments), le zinc (groupe IIB de la classification périodique des éléments) et le rhénium (groupe VIIB de la classification périodique des éléments) de manière à déposer environ 0,6% en masse de métal

Pour le palladium, on utilise comme précurseur le bis-acétylacétonate de palladium dissous dans un volume de toluène équivalent à 5 fois le volume poreux du support engagé. Après 48 heures d'échange, le catalyseur est rincé, séché sous air pendant 12 heure, puis calciné 2 heures à 350 °C sous air en dynamique.
Pour le rhodium, on utilise en tant que précurseur le chlorure de rhodium que l'on dissout dans un volume d'eau équivalent au volume poreux du support. Après imprégnation, le catalyseur est séché sous air pendant 12 heures puis calciné 2 heures à 350°C sous courant d'air sec.

Pour le cobalt, on utilise comme précurseur le nitrate de cobalt que l'on dissout dans un volume d'eau équivalent au volume poreux du support. Après imprégnation, le catalyseur est séché sous air pendant 12 heures puis calciné 2 heures à 350°C sous courant d'air sec.

Pour le nickel, on utilise comme précurseur le nitrate de nickel que l'on dissout dans un volume d'eau équivalent au volume poreux du support. Après imprégnation, le catalyseur est séché sous air pendant 12 heures puis calciné 2 heures à 350°C sous courant d'air sec.

Pour l'or, la méthode utilisée est la même que celle décrite ci-dessus, mais en opérant en présence d'acide chloroaurique dissout dans le volume d'eau adéquat.

Pour le zinc, on utilise comme précurseur le chlorure de zinc que l'on dissout dans un volume d'eau équivalent au volume poreux du support. Après imprégnation, le catalyseur est séché sous air pendant 12 heures à 130°C, puis calciné 2 heures à 350°C sous courant d'air sec.

Pour le rhénium, on utilise comme précurseur le perrhenate d'ammonium que l'on dissout dans un volume d'eau équivalent au volume poreux du support. Après imprégnation, le catalyseur est séché sous air pendant 12 heures à 130°C puis calciné 2 heures à 400°C sous courant d'air sec.

Les catalyseurs obtenus présentent les teneurs en fluor et métaux indiqués dans le tableau 1

**Tableau 1**

| Catalyseur | Support | %F | %Cl | % Métal |
|---|---|---|---|---|
| Ni | S2 | 0,58 | 0,45 | 0,58 |
| Pd | S2 | 0,57 | 0,58 | 0,57 |
| Rh | S2 | 0,54 | 0,81 | 0,54 |
| Co | S2 | 0,57 | 0,47 | 0,65 |
| Au | S2 | 0,51 | 0,48 | 0,44 |
| Zn | S2 | 0,63 | 0,76 | 0,37 |
| Re | S2 | 0,55 | 0,37 | 0,53 |
| Ni | S3 | 5,3 | 0,55 | 0,55 |
| Pd | S3 | 5,8 | 0,65 | 0,55 |
| Rh | S3 | 5,3 | 0,96 | 0,57 |
| Co | S3 | 5,4 | 0,44 | 0,56 |
| Au | S3 | 5,7 | 0,51 | 0,43 |
| Zn | S3 | 5,9 | 0,86 | 0,43 |
| Re | S3 | 5,6 | 0,43 | 0,57 |

### Exemple n°4 : Préparation des catalyseurs bimétalliques

La méthode utilisée consiste à introduire un élément additionnel sur chacun des catalyseurs de l'exemple 3 contenant un métal du groupe VIII (Ni, Pd, Rh, Co). Lorsque le métal additionnel est un métal du groupe IB, de préférence l'or, l'imprégnation de l'or est réalisée avec l'acide chloroaurique que l'on dissout dans une solution d'acide chlorhydrique à 2 % en Cl dont le volume est équivalent au volume poreux du support de manière à déposer environ 0,5 % en masse d'or Après imprégnation, le catalyseur est séché sous air pendant 12 heures à 130°C puis calciné 2 heures à 400°C sous courant d'air sec.
Lorsque le métal additionnel est un métal du groupe IIB, de préférence le zinc, l'imprégnation du zinc est réalisée avec le chlorure de zinc que l'on dissout dans une solution d'acide chlorhydrique à 2 % en Cl dont le volume est équivalent au volume poreux du support de manière à déposer environ 0,7 % en masse de zinc. Après imprégnation, le catalyseur est séché sous air pendant 12 heures à 130°C puis calciné 2 heures à 400°C sous courant d'air sec. Cette opération conduit à une perte de Zn substantielle.
Lorsque le métal additionnel est un métal du groupe VIIB, de préférence le rhénium, l'imprégnation du rhénium est réalisée avec le perrhenate d'ammonium que l'on dissout dans une solution d'acide chlorhydrique à 2 % en Cl dont le volume est équivalent au volume poreux du support de manière à déposer environ 0,6 % en masse de rhénium. Après imprégnation, le catalyseur est séché sous air pendant 12 heures à 130°C puis calciné 2 heures à 400°C sous courant d'air sec.

Les catalyseurs obtenus présentent les teneurs en fluor, chlore et métaux indiquées dans les tableaux 2 1, 2.2 et 2 3.

**Tableau 2.1**

| | Support | %F | %Cl | % métal groupe IB | % métal groupe VIII |
|---|---|---|---|---|---|
| NiAu | S2 | 0,55 | 1,12 | 0,43 | 0,54 |
| PdAu | S2 | 0,53 | 0,97 | 0,41 | 0,55 |
| RhAu | S2 | 0,52 | 1,1 | 0,42 | 0,52 |
| CoAu | S2 | 0,52 | 0,84 | 0,38 | 0,53 |
| NiAu | S3 | 5,4 | 0,93 | 0,43 | 0,49 |
| PdAu | S3 | 5,7 | 0,79 | 0,40 | 0,51 |
| RhAu | S3 | 5,7 | 0,85 | 0,45 | 0,50 |
| CoAu | S3 | 5,5 | 0,91 | 0,39 | 0,53 |

**Tableau 2.2**

| | Support | %F | %Cl | % métal groupe IIB | % métal groupe VIII |
|---|---|---|---|---|---|
| NiZn | S2 | 0,50 | 0,72 | 0,32 | 0,55 |
| PdZn | S2 | 0,51 | 0,65 | 0,28 | 0,53 |
| RhZn | S2 | 0,55 | 0,73 | 0,34 | 0,51 |
| CoZn | S2 | 0,48 | 0,54 | 0,27 | 0,49 |
| NiZn | S3 | 5,4 | 0,75 | 0,29 | 0,51 |
| PdZn | S3 | 5,1 | 0,61 | 0,35 | 0,48 |
| RhZn | S3 | 5,4 | 0,68 | 0,28 | 0,46 |
| CoZn | S3 | 4,9 | 0,73 | 0,25 | 0,47 |

**Tableau 2.3**

| | Support | %F | %Cl | % métal groupe VIIB | % métal groupe VIII |
|---|---|---|---|---|---|
| NiRe | S2 | 0,61 | 0,99 | 0,53 | 0,57 |
| PdRe | S2 | 0,55 | 0,87 | 0,60 | 0,56 |
| RhRe | S2 | 0,52 | 0,93 | 0,65 | 0,51 |
| CoRe | S2 | 0,50 | 0,76 | 0,58 | 0,60 |
| NiRe | S3 | 5,0 | 1,02 | 0,56 | 0,53 |
| PdRe | S3 | 5,6 | 0,98 | 0,55 | 0,52 |
| RhRe | S3 | 5,0 | 0,86 | 0,52 | 0,53 |
| CoRe | S3 | 5,2 | 0,73 | 0,54 | 0,55 |

### Exemple n°5 : Conversion hydrogénante pour une charge de type LCO

Dans cet exemple, les catalyseurs obtenus comme décrit dans les exemples précédents sont évalués au moyen d'un test catalytique, dont les conditions opératoires générales sont les suivantes :
- Pression totale : 60 bars
- Charge : LCO hydrotraité
- Réacteur : à courant ascendant.

Avant utilisation, les catalyseurs Ni, Pd, Co, Rh supportés sur alumine subissent une étape d'activation sous courant d'hydrogène à 450 °C pendant 2 heures. Les catalyseurs Au, NiAu, PdAu, CoAu, RhAu, Zn, NiZn, PdZn, CoZn, RhZn, Re, NiRe, PdRe, CoRe, RhRe subissent une étape d'activation sous courant d'hydrogène à 550 °C pendant 2 heures. Cette réduction peut se faire, soit dans le réacteur du test catalytique (conditions *in situ*), soit dans une cellule de réduction annexe (conditions *ex situ*).

Dans le tableau 3 suivant, on a reporté les caractéristiques de la charge de type LCO hydrotraité.

**Tableau 3**

| Caractéristiques | Charge LCO |
|---|---|
| Densité à 20 °C | 0,898 |
| Soufre (ppm) | 128 |
| Azote (ppm) | 110 |

| Distillation (°C) | |
|---|---|
| Point initial | 171 |
| 10 % en volume | 238 |
| 50 % en volume | 301 |
| 90 % en volume | 377 |
| Point final | 405 |

| Composition en aromatiques (% en poids) | |
|---|---|
| Mono-aromatiques | 37 |
| Di-aromatiques | 15 |
| Tri-aromatiques | 2 |
| Total | 54 |
| CA* (% en poids) | 30 |

| | |
|---|---|
| (*) CA = Carbone aromatique mesuré par RMN | |

Les performances catalytiques des catalyseurs dont la description est faite dans les exemples précédents sont ensuite évaluées au cours du test catalytique dont les conditions opératoires sont les suivantes :
- Pression totale 60 bars
- VVH (vitesse spatiale) 1 l de charge liquide / l de catalyseur/h
- Température 280 °C
- Rapport H₂/Charge 450 M/NI

Dans le tableau 4 suivant, on indique la conversion en aromatiques obtenue avec les catalyseurs monométalliques et bimétalliques sur le support S2, non conforme à l'invention.

**Tableau 4**

| | CA* effluent (% poids) | % HDCA** |
|---|---|---|
| Ni-S2 | 29,5 | 1,5 |
| Pd-S2 | 25 | 16,6 |
| Rh-S2 | 24 | 20,0 |
| Co-S2 | 29,9 | 0,3 |
| Au-S2 | 29,8 | 0,7 |
| Zn-S2 | 30 | 0 |
| Re-S2 | 28 | 6,7 |
| NiAu-S2 | 28,8 | 4,0 |
| PdAu-S2 | 21 | 30,0 |
| RhAu-S2 | 20 | 33,3 |
| CoAu-S2 | 29,6 | 1,3 |
| NiZn-S2 | 29 | 3,3 |
| PdZn-S2 | 23 | 23,3 |
| RhZn-S2 | 23 | 23,3 |
| CoZn-S2 | 29,9 | 0,3 |
| NiRe-S2 | 26 | 13,3 |
| PdRe-S2 | 18,5 | 38,3 |
| RhRe-S2 | 17 | 43,3 |
| CoRe-S2 | 26,5 | 11,6 |

| | | |
|---|---|---|
| (*) CA = Carbone aromatique mesuré par RMN (* *) HDCA = taux d'hydrogénation du carbone aromatique. | | |

On constate dans le tableau 4 que pour un support à faible teneur en fluor (S2) l'association d'un métal du groupe VIII et d'un métal additionnel apporte une amélioration sensible de l'activité en hydrogénation des aromatiques dans la charge contenant du soufre.

On a cherché à déterminer ensuite si ce gain est augmenté lorsque l'on utilise un support à forte teneur en fluor (S3). Dans le tableau 5 suivant, on indique la conversion en aromatiques obtenue avec les catalyseurs sur le support S3 contenant une forte teneur en fluor.

**Tableau 5**

| | CA* effluent (% poids) | %HDCA** |
|---|---|---|
| Ni-S3 | 28 | 6,7 |
| Pd-S3 | 18 | 40,0 |
| Rh-S3 | 18,5 | 38,3 |
| Co-S3 | 29 | 3,3 |
| Au-S3 | 29,5 | 1,7 |
| Zn-S3 | 30 | 0 |
| Re-S3 | 22 | 26,6 |
| NiAu-S3 | 24 | 20,0 |
| PdAu-S3 | 16 | 46,7 |
| RhAu-S3 | 13 | 56,6 |
| CoAu-S3 | 26 | 13,3 |
| NiZn-S3 | 26 | 13,3 |
| PdZn-S3 | 17 | 43,3 |
| RhZn-S3 | 15 | 50,0 |
| CoZn-S3 | 28 | 6,6 |
| NiRe-S3 | 20 | 33,3 |
| PdRe-S3 | 14 | 53,3 |
| RhRe-S3 | 11 | 63,3 |
| CoRe-S3 | 15 | 50,0 |

| | | |
|---|---|---|
| (*) CA = Carbone aromatique mesuré par RMN (**) HDCA = taux d'hydrogénation du carbone aromatique | | |

On constate dans le tableau 5 que l'association d'un métal du groupe VIII à un métal additionnel (IB, IIB, VIIB) est également bénéfique lorsque les métaux sont déposés sur le support S3 à forte teneur en fluor, ce qui confirme les résultats du tableau 4. L'ajout de l'or, de zinc ou de rhénium à un catalyseur comprenant un métal du groupe VIII se traduit par une nette amélioration de l'activité en hydrogénation des aromatiques dans la charge contenant du soufre. En comparant les résultats obtenus pour les catalyseurs à forte teneur en fluor (tableau 5) et les catalyseurs à faible teneur en fluor (tableau 4) on constate l'effet bénéfique de la forte teneur en fluor. Ce type de catalyseur bimétallique sur support oxyde contenant du chlore et une quantité importante de fluor permet donc de traiter des charges contenant des quantités relativement importantes de soufre (128 ppm en poids dans cet exemple) en présentant un niveau élevé d'activité en hydrogénation.

## Revendications

1. Catalyseur comprenant au moins une matrice oxyde amorphe, au moins deux halogènes dont du chlore et du fluor, au moins un métal du groupe VIII et au moins un métal additionnel choisi parmi les métaux du groupe IB, les métaux du groupe IIB et les métaux du groupe VIIB **caractérisé en ce que** la quantité de fluor représente au moins 1,5 % en poids de la masse totale dudit catalyseur.

2. Catalyseur selon la revendication 1 **caractérisé en ce que** la quantité de fluor est d'au plus 20 % en poids de la masse totale du catalyseur.

3. Catalyseur selon la revendication 1 ou 2 **caractérisé en ce que** la quantité de fluor est comprise entre 1,8 et 15 % en poids de la masse totale du catalyseur.

4. Catalyseur selon l'une des revendications 1 à 3 **caractérisé en ce que** la quantité de fluor est comprise entre 2 et 10 % en poids de la masse totale du catalyseur.

5. Catalyseur selon l'une des revendications 1 à 4 **caractérisé en ce qu'**il contient par rapport à sa masse totale, de 78 à 98,3 % d'au moins une matrice oxyde amorphe, de 0,1 à 5 % d'au moins un métal additionnel et de 0,1 à 5 % d'au moins un métal du groupe VIII, ainsi que de 0,1 à 10% de chlore.

6. Catalyseur selon l'une des revendications 1 à 5 **caractérisé en ce que** le métal du groupe VIII est choisi dans le groupe constitué par le palladium, le rhodium, le nickel et le cobalt.

7. Catalyseur selon l'une des revendications 1 à 6 **caractérisé en ce que** le métal du groupe IB est l'or ou l'argent.

8. Catalyseur selon l'une des revendications 1 à 6 **caractérisé en ce que** le métal du groupe IIB est le zinc.

9. Catalyseur selon l'une des revendications 1 à 6 **caractérisé en ce que** le métal du groupe VIIB est le rhénium.

10. Catalyseur selon l'une des revendications 1 à 9 **caractérisé en ce que** la matrice oxyde amorphe est choisie parmi l'alumine, la silice ou la silice alumine.

11. Procédé de préparation d'un catalyseur selon l'une des revendications 1 à 10 **caractérisé en ce que** la matrice oxyde amorphe est préalablement mise en contact avec le chlore et le fluor, puis on introduit le métal du groupe VIII et le métal additionnel.

12. Utilisation d'un catalyseur selon l'une des revendications 1 à 10 ou préparé selon le procédé de la revendication 11 pour le traitement de coupes hydrocarbonées.

13. Utilisation selon la revendication 12 dans un procédé d'hydrogénation de composés aromatiques présents dans des coupes hydrocarbonées comprenant du soufre.

14. Utilisation selon l'une des revendications 12 à 13 dans un procédé réalisé à des températures de 100 à 400°C, à une pression opératoire de 0,1 à 30 MPa, à une vitesse spatiale exprimée en volume de charge liquide traitée par volume de catalyseur et par heure, comprise entre 0,1 et 20, avec un rapport hydrogène/charge de 50/1 à 2000/1 en volume d'hydrogène par volume de charge liquide.

## Claims

1. A catalyst comprising at least one amorphous oxide matrix, at least two halogens including chlorine and fluorine, at least one metal from group VIII and at least one additional metal selected among metals from group IB, metals from group IIB and metals from group VIIB **characterized in that** the quantity of fluorine represents at least 1.5% by weight of the total catalyst mass.

2. A catalyst according to claim 1, **characterized in that** the quantity of fluorine is at most 20% by weight of the total catalyst mass.

3. A catalyst according to claim 1 or claim 2, **characterized in that** the quantity of fluorine is in the range 1.8% to 15% by weight of the total catalyst mass.

4. A catalyst according to any one of claims 1 to 3, **characterized in that** the quantity of fluorine is in the range 2% to 10% by weight of the total catalyst mass.

5. A catalyst according to any one of claims 1 to 4, **characterized in that** it contains, with respect to the total mass, 78% to 98.3% of at least one amorphous oxide matrix, 0.1% to 5% of at least one additional metal and 0.1% to 5% of at least one group VIII metal, as well as 0.1% to 10% of chlorine.

6. A catalyst according to any one of claims 1 to 5, **characterized in that** the group VIII metal is selected from the group formed by palladium, rhodium, nickel and cobalt.

7. A catalyst according to any one of claims 1 to 6, **characterized in that** the group IB metal is gold or silver.

8. A catalyst according to any one of claims 1 to 6, **characterized in that** the group IIB metal is zinc.

9. A catalyst according to any one of claims 1 to 6, **characterized in that** the group VIIB metal is rhenium.

10. A catalyst according to any one of claims 1 to 9, **characterized in that** the amorphous oxide matrix is selected from alumina, silica and silica alumina.

11. A process for preparing a catalyst according to any one of claims 1 to 10, **characterized in that** the amorphous oxide matrix is first brought into contact with chlorine and fluorine, then the group VIII metal and the additional metal are introduced.

12. Use of a catalyst according to any one of claims 1 to 10 or prepared in accordance with the process of claim 11, for the treatment of hydrocarbon cuts.

13. Use according to claim 12 in a process for hydrogenating aromatic compounds present in hydrocarbon cuts comprising sulphur.

14. Use according to any one of claims 12 to 13, in a process carried out at temperatures of 100°C to 400°C, at an operating pressure of 0.1 to 30 MPa, at a space velocity, expressed as the volume of liquid feed treated per unit volume of catalyst per hour, in the range 0.1 to 20, with a hydrogen/feed ratio of 50/1 to 2000/1 by volume of hydrogen per unit volume of liquid feed.

## Patentansprüche

1. Katalysator, der mindestens eine amorphe Oxidmatrix, mindestens zwei Halogene Chlor oder Fluor, mindestens ein Metall der Gruppe VIII sowie mindestens ein zusätzliches Metall ausgewählt aus den Metallen der Gruppe IB, den Metallen der Gruppe IIB und den Metallen der Gruppe VIIB umfasst, **dadurch gekennzeichnet, dass** der Anteil an Fluor mindestens 1,5 Gew.% der Gesamtmasse des Katalysators darstellt.

2. Katalysator nach Anspruch 1, **dadurch gekennzeichnet, dass** der Anteil an Fluor höchstens 20 Gew.% der Gesamtmasse des Katalysators beträgt.

3. Katalysator nach Anspruch 1 oder 2, **dadurch gekennzeichnet, dass** der Anteil an Fluor zwischen 1,8 und 15 Gew.% der Gesamtmasse des Katalysators beträgt.

4. Katalysator nach einem der Ansprüche 1 bis 3, **dadurch gekennzeichnet, dass** der Anteil an Fluor zwischen 2 und 10 Gew.% der Gesamtmasse des Katalysators beträgt.

5. Katalysator nach einem der Ansprüche 1 bis 4, **dadurch gekennzeichnet, dass** er in Bezug auf seine Gesamtmasse 78 bis 98,3 % mindestens einer amorphen Oxidmatrix, 0,1 bis 5 % mindestens eines zusätzlichen Metalls und 0,1 bis 5 % mindestens eines Metalls der Gruppe VIII sowie 0,1 bis 10 % Chlor enthält.

6. Katalysator nach einem der Ansprüche 1 bis 5, **dadurch gekennzeichnet, dass** das Metall der Gruppe VIII ausgewählt ist aus der Gruppe bestehend aus Palladium, Rhodium, Nickel und Kobalt.

7. Katalysator nach einem der Ansprüche 1 bis 6, **dadurch gekennzeichnet, dass** das Metall der Gruppe IB Gold oder Silber ist.

8. Katalysator nach einem der Ansprüche 1 bis 6, **dadurch gekennzeichnet, dass** das Metall der Gruppe IIB Zink ist.

9. Katalysator nach einem der Ansprüche 1 bis 6, **dadurch gekennzeichnet, dass** das Metall der Gruppe VIIB Rhenium ist.

10. Katalysator nach einem der Ansprüche 1 bis 9, **dadurch gekennzeichnet, dass** die amorphe Oxidmatrix ausgewählt wird aus Tonerde, Siliciumdioxid oder Siliciumdioxid-Tonerde.

11. Verfahren zur Herstellung eines Katalysators nach einem der Ansprüche 1 bis 10, **dadurch gekennzeichnet, dass** die amorphe Oxidmatrix vorab mit Chlor und Fluor in Kontakt gebracht wird und daraufhin das Metall der Gruppe VIII und das zusätzliche Metall zugesetzt wird.

12. Verwendung eines Katalysators nach einem der Ansprüche 1 bis 10 oder hergestellt nach dem Verfahren des Anspruchs 11 zur Behandlung von Kohlenwasserstofffraktionen.

13. Verwendung nach Anspruch 12 in einem Verfahren zur Hydrierung aromatischer Verbindungen, welche in schwefelhaltigen Köhlenwasserstofffraktionen vorkommen .

14. Verwendung nach einem der Ansprüche 12 bis 13 in einem Verfahren, das bei Temperaturen von 100 bis 400 °C, einem operativen Druck von 0,1 bis 30 MPa, einer Raumgeschwindigkeit, die in Volumen der behandelten flüssigen Beschickung pro Volumen des Katalysators und pro Stunde ausgedrückt zwischen 0,1 und 20 beträgt, bei einem Verhältnis von Wasserstoff/Beschicküng von 50/1 bis 2000/1 Wasserstoffvolumen pro Volumen der flüssigen Beschickung durchgeführt wird.
